(19)

Europäisches Patentamt

European Patent Office

Office européen des brevets

(11) **EP 4 524 190 A1**

(12) **EUROPEAN PATENT APPLICATION**

(43) Date of publication:
**19.03.2025 Bulletin 2025/12**

(21) Application number: **23198069.9**

(22) Date of filing: **18.09.2023**

(51) International Patent Classification (IPC):
**C08K 5/14** $^{(2006.01)}$

(52) Cooperative Patent Classification (CPC):
(C-Sets available)
**C08J 11/06;** C08L 2207/20          (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Basell Polyolefine GmbH
50389 Wesseling (DE)**

(72) Inventors:
- **MAUS, Andreas
  65926 Frankfurt am Main (DE)**
- **SCHNEIDER, Patrik
  65926 Frankfurt am Main (DE)**

(74) Representative: **LyondellBasell
c/o Basell Polyolefine GmbH
Industriepark Hoechst, Bldg. E413
65926 Frankfurt am Main (DE)**

(54) **A RECYCLED POLYMER COMPOSITION**

(57)     The present invention relates to a composition comprising a mixture of a recycled polymer and a chain extender or a peroxide are provided. The recycled polymer is a polyolefin from 50 wt% to 99 wt%. The chain extender or a peroxide is present from 0.1 wt% to 3 wt%, based on the total weight of the composition. The chain extender or peroxide is added to adjust the High Load Melt Index (HLMI), improving processability and enhancing the quality of the recycled polymer. The chain extender or peroxide which is introduced under mild melt compounding conditions to prevent gel formation.

**EP 4 524 190 A1**

(52) Cooperative Patent Classification (CPC): (Cont.)

C-Sets
**C08K 5/14, C08L 23/04**

## Description

FIELD OF THE INVENTION

In general, the present disclosure relates to the field of chemistry. Specifically, the present disclosure relates to post-consumer recyclate. In particular, the present disclosure relates to adding chain extender or peroxides for adjusting High Load Melt Index (HLMI) of a polymer recyclate.

BACKGROUND OF THE INVENTION

Generally polymers, especially synthetic plastics, are ubiquitous in daily life due to their relatively low production costs and good balance of material properties. Particularly synthetic plastics are used in a wide variety of applications, such as packaging, automotive components, medical devices, and consumer goods etc. To meet the high demand of these applications, tens of millions of tons of synthetic plastics are produced globally on an annual basis. The overwhelming majority of such synthetic plastics are produced from increasingly scarce fossil sources, such as petroleum and natural gas.

The wide use of synthetic plastics has consequently led to millions of tons of plastic waste being generated every year. While the majority of plastic waste is landfilled via municipal solid waste programs or incinerated for energy recovery. A pertinent portion of plastic waste is found in the environment as litter, which is unsightly and potentially harmful to ecosystems. Plastic waste is often washed into river systems and ultimately out to sea.

Plastics recycling has been widely known in the art as one solution to reduce the risks associated with the wide-spread usage of plastics, their end-of-life, and their leakage to the environment. Recovering and re-using plastics diverts waste from landfills and reduces the demand for virgin plastics made from fossil-based resources, which consequently reduces greenhouse gas emissions. It is also known that in developed regions, such as the United States and the European Union, the rate of plastic recycling has increased due to greater awareness by consumers, businesses, and industrial manufacturing operations. The majority of recycled materials, including plastics, are mixed into a single stream which is collected and processed by a material recovery facility.

Further at the material recovery facility, materials are sorted, washed, and packaged for resale. Plastics can be sorted into individual materials, such as high-density polyethylene (HDPE), poly(ethylene terephthalate) (PET), or mixed streams of other common plastics, such as polypropylene (PP), low-density polyethylene (LDPE), poly(vinyl chloride) (PVC), polystyrene (PS), polycarbonate (PC), and polyamides (PA). The single or mixed streams can then be further sorted, washed, and reprocessed into pellets that are suitable for reuse in plastics processing, for example blow and injection molding.

The plastic waste generated can be from two difference sources, namely post-industrial recycled and post-consumer recycled. It is well known to a person of oridinary skilled in the art that PIR is the raw material made from waste generated within the industry, and PCR is the raw material made from waste from the consumer/end use. At present post-consumer recycled (PCR) and post-industrial recycled (PIR) polymers are used for various applications, as stated above. Different types of PCR polymers are sorted and preprocessed for providing as feedstock for article production and other applications. However, high quality and well sorted PCR and PIR feedstocks are difficult to access. Even if feedstocks have less impurities and low amount of other polymers, their melt flow rate (MFR) might not be in the range for a desired application.

Recycled polymers, especially recycled polyolefins such as polyethylene and polypropylene, hold significant potential for sustainable manufacturing practices. However, these recycled polymers often exhibit high melt index values, which can negatively impact their processability and mechanical properties. Therefore, there is a need for an improved recycled polymer composition that overcomes these limitations.

The aforesaid limitations associated in the existing state of art neccesitates the need for adjusting the MFR of a recycled polymer based on the end product requirements. The present invention thus discloses use of a chain extender or peroxide as a reactive additive to the polymer matrix for adjusting the MFR of the recycled polymer material based on desired application.

BRIEF SUMMARY OF THE INVENTION

The present disclosure provides a recycled polymer composition comprising a mixture of at least one recycled polymer and a reactive additive selected from chain extenders or peroxides, wherein the recycled polymer has a High Load Melt Index (HLMI) in the range of 18 to 45 g/10 min, and wherein the addition of said additive to the recycled polymer results in a reduction of High Load Melt Index (HLMI) to the range of 8 to 30 g/10 min.

The present disclosure further provides a process for producing a recycled polymer composition comprising the steps of:

a) providing a recycled polymer feedstock;

b) melt-compounding the recycled polymer feedstock and a reactive additive in an extruder, the reactive additive being selected from chain extenders or peroxides;

c) obtaining recycled polymer pellets,

wherein the addition of said additive to the recycled polymer feedstock results in a reduction of the High Load Melt Index (HLMI) to the range of 8 to 30 g/10 min compared to the recycled polymer feedstock without the reactive additive.

It has been found that by the addition of chain extenders and/or peroxides to the recycled polymer a chain extension occurs. This chain extension leads to an increase in molecular weight of polymer chains and lowers the melt flow rate without causing a drop in mechanical properties such as FNCT and/or swell ratio. Good and well sorted recycled polymer feedstocks are difficult to access and even if feedstocks have good quality, i.e. being clean and have a low amount of other polymers, they might not fit with respect to the melt flow rate for a desired application. However, the present disclosure provides an upgraded recycled polymer composition and a method for upgrading recycled polymer feedstock suitable for applications like small blow molding, jerry cans or open top drums.

In the following further exemplary embodiments are described. These embodiments are advantageous on their own and their technical features may be arbitrarily combined or even omitted if the technical effect achieved by the omitted technical feature is not relevant.

For example, the recycled polymer may be selected from a group consisting of recycled polyolefins, preferably recycled polyethylene, recycled polypropylene, recycled polybutenes or a mixture thereof. The polyolefin may preferably be present in an amount in the range of from 50 wt% to 99 wt%, based on the weight of the recycled polymer composition. In some embodiments, the recycled polymer may be a recycled polyethylene, preferably recycled high density polyethylene, recycled low density polyethylene, recycled linear low density polyethylene, recycled medium density polyethylene or a mixture thereof.

The recycled polymer feedstock may be further blended with a second polymer component, the second polymer component may for example be a virgin grade homo or copolymer. Preferably, the second polymer component may be a polyolefin, such as polyethylene or polypropylene.

The recycled polymer, may have an environmental stress cracking resistance according to full notch creep test (FNCT) of from 3 to 40 measured at 6 MPa and 50°C. The final polymer composition may have a FNCT equal to or even higher than to the FNCT of the recycled polymer.

The recycled polymer may further have a swell ratio of 130 to 230, wherein the swell ratio of the final polymer composition is about the same as that of the recycled polymer. It should be noted that in the context of swell ratio, the term "about" should be read as $\pm$ 20% or $\pm$ 10%.

In one embodiment, the chain extender is used as reactive additive. The chain extender may be selected from acid anhydride, pyromellitic anhydride, oxazolines, isocyanates, epoxides, lactams, hydroxyls, carboxylic acids and organic phosphites and phosphate or a mixture thereof.

Alternatively, peroxides may be used as reactive additive. The peroxides may be selected from idodecanoyl peroxide, Bis(4-tert-butylcyclohexyl) peroxydicarbonate, dicetyl dicarbonateperoxide, dibenzoyl peroxide, Dicumenyl peroxide, 2,5-Bis(tert-butylperoxy)-2,5-dimethylhexane, alpha-bis (tert-butyl peroxy) diisopropylbenzene, Di-tert-butyl peroxide, or a mixture thereof.

In some embodiments, the recycled polymer composition may comprise an additive package. The additive package may comprise one or more additives, which may preferably be fed to a mixing device together with the recycled polyolefin before feeding the mixture to the extruder device.

The additives may be present in the range of 0.1 wt.% to 3 wt.% based on the total weight of the recycled polymer composition.

Alternatively or in addition to the additive package, the recycled polymer composition may comprise virgin polymer, preferably polyolefins selected from polyethylene, polypropylene, polybutenes or a mixture thereof. Thus, it is further possible to upgrade the characteristics of the recycled polymer fraction, such as FNCT and swell ratio, by adding a virgin polymer fraction.

In some embodiments, the additives from the additive package are introduced to the extruder after the addition of the recycled polymer feedstock or together with the recycled polymer feedstock.

The additives may be introduced as a masterbatch together with the recycled polymer feedstock. The additive package may particularly include reactive additives such as chain extenders or peroxides.

The present disclosure further relates to a process for producing a molded article comprising the steps of:

a) providing a recycled polymer feedstock;

b) extruding the recycled polymer feedstock at a temperature of 170 to 240°C;

c) obtaining recycled polymer particles;

d) blow molding the recycled polymer pellets to form a recycled polymer product;

e) adding a reactive additive,

wherein the addition of said reactive additive to the recycled polymer results in a reduction of the High Load Melt Index (HLMI) to the range of 8 to 30 g/10 min as compared to the polymer pellets without the reactive additives.

The molded article may be selected from the group comprising but not limited to cans, top drums, bags, food containers, beverage containers and jerry cans.

The reactive additive may be added in different steps of the production process. It may for example be added during step b) leading to a high reactivity and thus a higher reduction of the HLMI. However, it may also be added in step d), i.e. during the blow molding step, i.e. via a separate feeder, salt and pepper mix or it may even be sprayed on during the blow molding step.

It should be appreciated by those skilled in the art that the conception and specific embodiments disclosed may be readily utilized as a basis for modifying or designing molded containers or articles (injection, compression, or blow molded; thermoformed; or extruded), and/or processes for carrying out the same purposes of the present disclosure.

DETAILED DESCRIPTION OF THE INVENTION

Illustrative embodiments of the subject matter claimed will now be disclosed. In the interest of clarity, some features of some actual implementations may not be described in this specification. It will be appreciated that in the development of any such actual embodiments, numerous implementation-specific decisions must be made to achieve the developer's specific goals, such as compliance with system-related and business-related constraints, which will vary from one implementation to another. Moreover, it will be appreciated that such a development effort, even if complex and time-consuming, would be a routine undertaking for those of ordinary skill in the art having the benefit of this disclosure.

The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than the broadest meaning understood by skilled artisans, such a special or clarifying definition will be expressly set forth in the specification in a definitional manner that provides the special or clarifying definition for the term or phrase. It must also be noted that, as used in the specification and the appended claims, the singular forms "a," "an," and "the" include plural references unless otherwise specified.

For example, the following discussion contains a non-exhaustive list of definitions of several specific terms used in this disclosure (other terms may be defined or clarified in a definitional manner elsewhere herein). These definitions are intended to clarify the meanings of the terms used herein. It is believed that the terms are used in a manner consistent with their ordinary meaning, but the definitions are nonetheless specified here for clarity.

As used in this specification and the claims, the terms "comprising," "containing," or "including" mean that at least the named compound, element, material, particle, or method step is present in the composition, the article, or the method, but does not exclude the presence of other compounds, elements, materials, particles, or method steps even if the other such compounds, elements, materials, particles, or method steps have the same function as that which is named, unless expressly excluded in the claims. It is also to be understood that the mention of one or more method steps does not preclude the presence of additional method steps before or after the combined recited steps or intervening method steps between those steps expressly identified.

Moreover, it is also to be understood that the lettering of process steps or ingredients is for identifying discrete activities or ingredients and the recited lettering can be arranged in any sequence, unless expressly indicated.

For the purpose of the present description and of the claims which follow, except where otherwise indicated, numbers expressing amounts, quantities, percentages, and so forth, are to be understood as being modified by the term "about". Also, ranges include any combination of the maximum and minimum points disclosed and include any intermediate ranges therein, which may or may not be specifically enumerated herein.

In the context of the present disclosure, the percentages are expressed by weight, unless otherwise specified. The total weight of a polymer composition sums up to 100% by weight, unless otherwise specified.

Definitions

"Copolymer" is referred to a polymer deriving from the intentional polymerization of at least two different comonomers, i.e. the term "copolymer" includes terpolymers.

"Recycled polyolefin material", "recyclate" and "recycled" indicated recovered material from either post-consumer waste (PCW) or post industrial waste (PIW) which includes a fraction made of polyolefins.

"Virgin" defines newly produced polyolefins prior to first use and not being recycled. The virgin polymer may be obtained from polymerization processes, such as from polymerization processes of fossil materials-based monomeric materials and/or biologically derived monomeric materials. Biobased polyethylenes and monomers are derived from natural products and are distinguished from polymers and monomers obtained from fossil-fuel sources. Because biobased materials are obtained from sources that may actively reduce $CO_2$ in the atmosphere or otherwise require less $CO_2$ emission during production, such materials are often regarded as "green" or renewable. The virgin polyolefin can derive from polymerization of olefins such as ethylene, propylene, butene-1, hexene-1 and octene-1 and mixtures thereof.

"HDPE," as used herein, means ethylene homopolymers and ethylene copolymers produced in a suspension, solution, slurry, or gas phase polymerization process and having a density in the range of 0.940 $g/cm^3$ to 0.970 $g/cm^3$.

"LDPE," as used herein, means ethylene homopolymers and/or ethylene copolymers produced in a high pressure free radical polymerization and having a density in the range of 0.910 $g/cm^3$ to lower than 0.940 $g/cm^3$.

"LLDPE," as used herein, means ethylene copolymers produced in a suspension, solution, slurry, or gas phase polymerization process and having a density in the range of 0.910 $g/cm^3$ to lower than 0.940 $g/cm^3$.

"MDPE," as used herein, means ethylene copolymers produced in a suspension, solution, slurry, or gas phase polymerization process and having a density in the range of 0.925 $g/cm^3$ to 0.940 $g/cm^3$

"PP," as used herein, means propylene homopolymers or copolymers produced in a suspension, solution, slurry, or gas phase polymerization process

"PB," as used herein, means butene homopolymers or copolymers produced in a suspension, solution, slurry, or gas phase polymerization process

"Olefin," as used herein, and alternatively referred to as "alkene," is a linear, branched, or cyclic compound of carbon and hydrogen having at least one double bond

"Recycled Polymer," as used herein, means post-consumer recycled ("PCR") polyolefin and/or post-industrial recycled ("PIR") polyolefin. Polyolefin recyclate is derived from an end product that has completed its life cycle as a consumer item and would otherwise be disposed of as waste (e.g., a polyethylene water bottle) or from plastic scrap that is generated as waste from an industrial process.

"Polyolefin," as used herein, in some embodiments is a type of polymer with the general formula $(CH_2CHR)_n$ where R is an alkyl group, including, but not limited to LDPE, LLDPE, MDPE, HDPE, and PP. Polyolefins are nonpolar polymers.

"Melt-compounding," as used herein, means temperature, pressure, and shear force conditions implemented in an extruder to provide intimate mixing of polymers and additives to produce a substantially homogeneous polymer product. The compounding conditions will be such that the specific energy from the compounder from shear and/or added heat are sufficient to melt the polymer components and homogenize them.

"Chain extender", as used herein, means means the capability of the individual component substances can react with the growing polymer chains, thereby extending their length and increasing the molecular weight.

In the present description, the terms "monomer" and "comonomer" are used interchangeably. The terms mean any compound with a polymerizable moiety that is added to a reactor in order to produce a polymer. In those instances in which a polymer is described as comprising one or more monomers, e.g., a polymer comprising propylene and ethylene, the polymer, of course, comprises units derived from the monomers, e.g., $-CH_2-CH_2-$, and not the monomer itself, e.g., $CH_2=CH_2$.

The following abbreviations are used herein:

| ABBREVIATION | TERM |
| --- | --- |
| HDPE | High density polyethylene |
| LDPE | Low density polyehtylene |
| LLDPE | Linear low density polyethylene |
| MDPE | Medium density polyethylene |
| PE | Polyethylene (an ethylene homopolymer or copolymer of a major portion of ethylene with one or more alpha-olefins and/or one or more polar comonomers) |
| PP | Polypropylene homopolymer or copolymer |
| wt% | weight percent |

Polyolefin Component

Specific examples of the olefinic polymers are high density ethylene polymers (HDPE, having a density higher than 0.940 g/cc), comprising ethylene homopolymers and copolymers of ethylene with alpha-olefins having 3-12 carbon atoms; linear low density polyethylenes (LLDPE, having a density lower than 0.940 g/cc) and very low density and ultra low density (VLDPE and LTLDPE, having a density lower than 0.920 g/cc, to 0.880 g/cc) consisting of copolymers of ethylene with one or more alpha-olefins having from 3 to 12 carbon atoms, having a mole content of units derived from the ethylene higher than 80%; isotactic polypropylenes and crystalline copolymers of propylene and ethylene and/or other alpha-olefins having a content of units derived from propylene higher than 85% by weight; copolymers of propylene and 1-butene having a content of units derived from 1-butene comprised between 1 and 40% by weight; heterophasic copolymers comprising a crystalline polypropylene matrix and an amorphous phase comprising copolymers of propylene with ethylene and/or other alpha-olefins.

The above mentioned polyolefins can be obtained by polymerizing the relative monomers in the presence of any type of polymerization catalyst, such as single-site or heterogeneous ZN catalysts, and using platform technologies known in the art such as liquid phase polymerization, gas-phase polymerization and hybrid liquid/gas-phase polymerization.

The process of the present disclosure is in particular a process for preparing polyolefin compositions comprising polyolefins which were obtained by homopolymerization or copolymerization of ethylene or propylene. As comonomers in proplylene polymerization preference is given to using up to 40 wt.% of ethylene and/or 1-butene.

In a preferred embodiment, the process of the present disclosure refers to preparing a polyolefin composition comprising polyolefins obtained by homopolymerizing or copolymerizing ethylene. Particular preference is given to preparing bimodal or multimodal polyolefin compositions comprising polyethylenes in which ethylene is copolymerized with up to 40 wt.% of $C_3$-$C_8$-1-alkenes, preferably butene-1, pentene-1, hexene-1, octene-1 or mixtures thereof. Particular preference is given to a process in which ethylene is copolymerized with up to 20 wt.% of butene-1, hexene-1 or mixtures thereof.

All industrially known polymerization methods may be used for preparing the virgin polyolefin components. This includes solution processes, suspension processes and gas-phase processes. The polymerization can be carried our batchwise or preferably continuously in two or more stages. Processes of this type are generally known to those skilled in the art. Among the polymerization processes mentioned, gas-phase polymerization, in particular in gas-phase fluidized bed reactors or multi-zone circulating gas-phase reactors and suspension polymerization, in particularly in loop reactors or stirred tank reactors are preferred.

The process of the present disclosure may be employed for preparing polyolefin compositions of all types of common polyolefin polymers. The process of the present disclosure is especially suitable for preparing polyolefin compositions comprising bimodal or multimodal polyolefins, wherein the terms bimodal and multimodal refer to the modality of the molecular weight distribution. Such polymers may be obtained from polymerizing olefins in a cascade of two or more polymerization reactors under different reaction conditions. Thus, the "modality" indicates how many different polymerization conditions were utilized to prepare the polyolefin, independently whether this modality of the molecular weight distribution can be recognized as separated maxima in a gel permeation chromatography (GPC) curve or not. As used herein, the term "multimodal" may define polyolefins have more than two modalities and thus excludes "bimodal". In addition to the molecular weight distribution, the polyolefin polymer can also have a comonomer distribution, wherein preferably the average comonomer content of polymer chains with a higher molecular weight is higher than the average comonomer content of polymer chains with a lower molecular weight. It is however also possible to employ identical or very similar reaction conditions in all polymerization reactors of the reaction cascade and so prepare narrow molecular weight polyolefin polymers. A complication in producing multimodal polyolefins in a cascade of polymerization reactors operating at different conditions is however that, caused by different residence times of individual polyolefin particles in the different reactor, the composition of the individual polyolefin particles of a polyolefin powder may vary strongly.

The polymerization can be carried out using all customary olefin polymerization catalyst. That means the polymerization can be carried out, for example, using Phillips catalysts based on chromium oxide, using titanium-based Ziegler- or Ziegler-Natta-catalysts, using single site catalysts, or using mixtures of such catalysts. The preparation and use of these catalysts for olefin polymerization are generally known.

The polyolefins are usually obtained as powder that means in form of small particles. The particles which have usually a more or less regular morphology and size, depending on the catalyst morphology and size, and on polymerization conditions. Depending on the catalyst used, the particles of the polyolefin powder usually have a mean diameter of from a few hundred to a few thousand micrometers. In the case of chromium catalysts, the mean particle diameter is usually from about 300 to about 1600 micrometers, and in the case of Ziegler type catalysts the mean particle diameter is usually from about 100 to about 3000 micrometers. The particle size distribution can, for example, advantageously be determined by sieving. Suitable techniques are e.g. vibrating sieve analysis or sieve analysis under an air jet.

In some embodiments, the virgin polyolefin component may be a low density polyethylene (LDPE).

There are two basic high pressure polymerization processes for the manufacture of LDPE: autoclave and tubular.

The LDPE made by the autoclave reactor process ("autoclave LDPE") has a high concentration of long chain branches, resulting into high values of elongation hardening, and a relatively broad molecular weight distribution that make it easy to process.

The autoclave polymerization may be carried out in the presence of radical initiating agents selected from organic peroxides.

The tubular reactor process does not necessarily require the use of organic peroxides. It can be carried out by using oxygen alone as the radical initiating agent, thus allowing to prepare LDPE which is free from products of chemical degradation of organic peroxides.

The said LDPE can also be prepared with a mixed process combining both autoclave and tubular reactors.

The said processes and the resulting LDPE product are well known in the art. For instance, US patent No. 3,691,145 and US patent application NO. 2010/0076160 teach producing LDPE in a tubular reactor process.

Polymer Recyclate

Preferably, the recycled polyolefin material results from the sorting of the PCW or PIW aimed at selecting the polyolefin fraction.

Depending on the needs, the sorting of polyolefin fraction can be enhanced in order to obtain an as much as possible pure fraction of either polypropylene or polyethylene. Preferably, the recycled polyolefin material comprises a mixture of polyethylene (PE) and polypropylene (PP) polymers in a weight ratio 99:1 to 1:99. When PP is more abundant in the mixture, its weight ratio with PE is preferably higher than 80/20, more preferably higher than 90/10, and especially from 95/5 to 99: 1. When PE is more abundant in the mixture, its weight ratio with PP is preferably higher than 80/20, more preferably higher than 90/10, and especially from 95/5 to 99:1. The polyethylene (PE) fraction can contain one or more of high density polyethylene (HDPE), low-density polyethylene (LDPE), linear low density polyethylene (LLDPE). Polypropylene fraction (PP) can be either propylene homopolymer or a propylene copolymer with lower amount of ethylene and/or butene. In addition, the feedstock may comprise other polyolefins like polybutene. In a particular embodiment, the feedstock may comprise also polymeric mixtures that incorporates other materials like polystyrene (PS), ethyl-vinyl acetate copolymer (EVA), ethyl-vinyl alcohol copolymer (EVOH), polyvinyl chloride (PVC), or mixtures thereof. In a preferred embodiment, the recycled polyolefin material feedstock is constituted by more than 80 wt.% and preferably more than 90 wt.% of a mixture between polyethylene and polypropylene.

Chain Extenders

The chain extender disclosed herein, may be selected from the group consisting of acid anhydride, oxazolines, isocyanates, epoxides, lactams, hydroxyls, carboxylic acids and organic phosphites and phosphates or a mixture thereof.

In particular, the chain extender may be added in the range of 0.1 wt% to 3 wt%, based on the total weight of the recycled polymer composition.

The chain extender can be isocyanate, for example 1,4-tetramethylene diisocyanate, 1,6-hexamethylene diisocyanate, 1-isocyanato-3-isocyanatomethyl-3,5,5-trimethylcyclohexane (also referred to as isophorone diisocyanate), 4,4'-diisocyanato-dicyclohexylmethane, phenylene-1,4-diisocyanate, 2,4- and 2,6-toluene diisocyanate, naphthylene-1,5-diisocyanate, 3,3'-bitoluene 4,4'-diisocyanate, diphenylmethane-4,4'-diisocyanate, 3,3'-dimethyl diphenylmethane 4.4'-diisocyanate, meta phenylene diisocyanate, 2,4-tolylene diisocyanate dimer and dianisidine diisocyanate, or mixtures thereof.

Examples for acid anhydrides are, but not limited to, difunctional, trifunctional or tetrafunctional anhydrides, for example maleic, trimellitic or pyromellitic anhydride, or mixtures thereof.

Examples for oxazolines are, but not limited to, 2-oxazoline, 2-methyl-2-oxazoline, 2-ethyl-2-oxazoline and 2-isopropyl-2-oxazoline, 2-butyl-2-oxazoline, 2-phenyl-2-oxazoline, 2,2'-bis- (2-oxazoline), 2,2'-methylene-bis- (2-oxazoline), 2,2'-ethylene-bis- (2-oxazoline), 2,2'-trimethylene-bis- (2-oxazoline), 2,2'-tetramethylene-bis- (2-oxazoline), 2,2 ' - Hexamethylene-bis- (2-oxazoline), 2,2'-octamethylene-bis- (2-oxazoline), 2,2'-ethylene-bis-(4,4'-dimethyl-2-oxazoline), 2,2'-p-phenylene-bis- (2-oxazoline), 2,2'-m-phenylene-bis- (2-oxazoline), 2,2'-m-phenylene-bis- (4,4 ' -Dimethyl-2-oxazoline), (2-oxazolinylcyclohexane) sulfide and bis- (2-oxazolinyl norbornane) sulfide, or mixtures thereof.

Examples for epoxies are, but not limited to, epoxylated novolacs, phenoxy resins, styrene- acrylate copolymers with epoxide functionalities, bisepoxides, or mixtures thereof.

Examples of lactams are, but not limited to, caprolactam, laurolactam, or mixtures thereof.

Examples of hydroxyls are, but not limited to, C2-10 aliphatic diols such as ethylene glycol and propylene glycol, diethylene glycol, triethylene glycol, dipropylene glycol, tripropylene glycol, polyols having 3 or more hydroxyl groups such as glycerin, trimethylolethane, trimethylolpropane triols, tetraols such as pentaerythritol and erythritol, pentaols such as arabitol, ribitol, xylitol, or mixtures thereof.

Examples of carboxylic acids are, but not limited to, aliphatic or aromatic carboxylic acids such as acetic acid, propionic acid, butyric acid, valeric acid ( valeric acid, isobutyric acid, trimethylacetic acid, 2-ethylhexanoic acid, nonanoic acid, isononanoic acid, heptanoic acid, Caproic acid, caprylic acid, capric acid, benzoic acid, lauric acid, myristic acid, palmitic acid, stearic acid, isostearic acid aric acid, behenic acid, lignoceric acid, cerotic acid, montanic acid, abietic acid, or mixtures thereof.

Examples of organic phosphites are, but not limited to, triphenyl phosphites, diphenyl alkyl phosphite, phenyl dialkyl phosphite, tris(nonylphenyl) phosphite, trilauryl phosphite, trioctadecyl phosphite, distearylpentaerythritol disphosphite, tris(2,4-di-tert-butylphenyl) phosphite, diisodecylpentaerythritol diphosphite, di(2,4-di-tert-butylphenyl)pentaerythritol diphosphite, tristearylsorbitol triphosphite, tetrakis(2,4-di-tert-butylphenyl)-4,4'-biphenylylene diphosphonite, triisodecyl phosphite, diisodecyl phenyl phosphite and diphenyl isodecyl phosphite or mixtures thereof.

Peroxides

In some embodiments, the peroxides disclosed herein, are selected from didodecanoyl peroxide, Bis(4-tert-butylcyclohexyl) peroxydicarbonate, dicetyl dicarbonateperoxide, dibenzoyl peroxide, Dicumenyl peroxide, 2,5-Bis(tert-butylperoxy)-2,5-dimethylhexane, alpha-bis (tert-butyl peroxy) diisopropylbenzene, Di-tert-butyl peroxide, or a mixture thereof.

In some embodiments, the peroxides disclosed herein, are present in the range of 0.1 wt% to 3 wt%, based on the total weight of the recycled polymer composition.

Additional Additives

In preferred embodiments, the polyolefin is additionally combined with one or more additives. Such additives are common in the art. Especially for multimodal polyolefins it is however essential that they are very uniformly distributed within the polyolefin. Examples of additives for preparing polyolefin compositions are antioxidants, light stabilizers, acid scavengers, lubricants, processing aids, antiblocking agents, slip agents, antistatic agents, antifogging agents, pigments or dyers, nucleating agents, flame retardants or fillers. It is common that several additives are added to the polyolefin compositions. The multiple additives can be different types of additives. It is however also possible that several representatives of one type of additives are added to one polyolefin composition. Additives of all these types are generally commercially available and are described, for example, in Hans Zweifel, Plastics Additives Handbook, 5th Edition, Munich, 2001.

In some embodiments, one of the additives supplied to the extruder device is an organic peroxide, such as dicumyl peroxide, di-tert-butyl peroxide, tert-butylperoxybenzoate, 2,5-dimethyl-2,5-di(tert-butylperoxy)hexane, 3,6,9-triethyl-3,6,9-trimethyl-1,2,4,5,7,8-hexoxonane, representatives of 3,6,9-trimethyl-3,6,9-tris(alkyl)-1,2,4,5,7,8-hexoxonanes in which the alkyl radical is propyl or ethyl, tertbutylperoxyneodecanoate, tert-amyl peroxypivalate, 1,3-bis(tert-butylperoxyisopropyl)benzene, and the like. Preferably, the organic peroxide is 2,5-dimethyl-2,5-di(tert-butylperoxy) hexane, 3,6,9-triethyl-3,6,9-trimethyl-1,2,4,5,7,8-hexoxonane, or a representative of 3,6,9-trimethyl-3,6,9-tris(alkyl)-1,2,4,5,7,8-hexoxonanes in which the alkyl radical is propyl or ethyl.

In some embodiments, the additional additives disclosed herein, are present in the range of 0.1-8 wt%, based on the total weight of the recycled polymer composition

Virgin Polymer

In some embodiments, the recycled polymer composition optionally comprises a virgin polymer, preferably polyolefin comprises polyethylenes, polypropylenes, or a combination thereof. In some embodiments, polyethylenes comprises an ethylene homopolymer or a copolymer of units derived from ethylene and units derived from one or more of C3-C20 alpha-olefins or a mixture thereof. In some embodiments, polypropylenes comprise a propylene homopolymer or a copolymer of units derived from propylene and units derived from one or more of ethylene and C4-C20 alpha-olefins or a mixture thereof.

Melt-compounding conditions:

In some embodiments, the mixture of the recycled polymer and the chain extenders or peroxides are subjected to compounding conditions sufficient to form an article. In some embodiments, compounding conditions are implemented in the compounding zone of an extruder or mixer and are tailored for mixtures of specific polyolefins, chain extenders or peroxides, additional additives and optionally a virgin polymer. The addition of chain extender or peroxide Temperature, pressure, and shear force conditions are implemented in the extruder or mixer sufficient to provide intimate mixing of the recycled polymer and the chain extenders or peroxides to produce a substantially homogeneous polymer blend.

In some embodiments, the chain extender or peroxide is introduced after the addition of the recycled polymer feedstock. In some embodiments, the chain extender or peroxide is introduced simultaneously during the addition of the recycled polymer feedstock. In some embodiments, the chain extender or peroxide is introduced as a masterbatch with the recycled polymer feedstock.

The compounding conditions will be such that the specific energy from the compounder from shear and/or added heat are sufficient to melt the recycled polymer composition and homogenize them. In some embodiments, compounding conditions comprise a temperature in the compounding zone of less than or equal to 300°C, less than or equal to 250°C. In some embodiments, where the recycled polymer comprises a polyolefin, temperatures in the compounding zone can be in the range of from 170°C to 240°C. The recycled polymer can be pelletized for later mixing a chain extender or a peroxide as described below or can be blended in the melted state with such chain extender or peroxide.

Examples of extruder devices for the process of the present disclosure are extruders or continuous mixers. These extruders or mixers can be single- or two-stage machines which melt and homogenize the polyethylene composition. Examples of extruders are pin-type extruders, planetary extruders or corotating disk processors. Other possibilities are combinations of mixers with discharge screws and/or gear pumps. Preferred extruders are screw extruders and in particular extruders constructed as twin-screw machine. Particular preference is given to twin-screw extruders and continuous mixers with discharge elements and especially to continuous mixers with counter rotating and intermeshing double screw or the extruder device comprises at least one co-rotating double screw extruder. Machinery of this type is conventional in the plastics industry and is manufactured by, for example, Coperion GmbH, Stuttgart, Germany; KraussMaffei Berstorff GmbH, Hannover, Germany; The Japan Steel Works LTD., Tokyo, Japan; Farrel Corporation, Ansonia, USA; or Kobe Steel, Ltd., Kobe, Japan. Suitable extruder devices are further usually equipped with units for pelletizing the melt, such as underwater pelletizers.

In some embodiments, at least the virgin polyolefin powder and one or more additives may be mixed in a mixing device prior to feeding the mixture to the extruder device. The recycled polyolefin pellets may be added directly to the extruder device or they may be added to the mixing device. The mixing device may be any apparatus which allows dry-blending of particles. The mixing device can operate continuously or discontinuously. Preferably, the mixing device operates continuously.

Preferred dry-blending devices are paddle mixers comprising one or two horizontally orientated rotating shafts, more preferably two horizontally orientated counter-rotating shafts. The shafts are equipped with paddles of an appropriate geometry. The rotating shafts move the composition of polyolefin powder and additives horizontally along the axis of the shafts and at the same time mix the composition intensively. Such paddle mixers are commercially available, for example, from Köllemann GmbH, Adenau, Germany or J. Engelsmann AG, Ludwigshafen, Germany. Preferred mixing devices are further vertical batch mixers such as Henschel-Mixers® available from Zeppelin Systems GmbH, Kassel, Germany. Preferred dry-blending devices are also single screw conveyors equipped with blending elements. Preferably, such blending elements are amendable devices such as adjustable paddles or slotted flights to allow controlling the level of blending.

The recycled polyolefin pellets and optionally the one or more additives are preferably supplied from dedicated storage vessels. It is however also possible to supply said recycled polyolefin pellets and optionally one or more additives directly from transport containers such as big bags. The additives which are utilized for preparing the polyolefin compositions of the present disclosure can be supplied in solid form, preferably in form of small particles, or they can be liquid or they are fed in dissolved form. It is possible to supply all additives individually or it is possible to supply one or more mixtures of additives comprising some of the selected additives or a mixture of all additives is supplied with the polyolefin powder. Preferably all additives are supplied in form of solid particles.

The prepared polyolefin compositions comprises a virgin polyolefin, recycled polyolefin and optionally one or more additives. The composition of the prepared polyolefin compositions is preferably defined by a recipe which identifies the nature of the employed polyolefin powder, the nature of the employed recycled polyolefin material, the nature of the additives, their number, their quantity and their ratio. The constitution of the prepared polyolefin compositions may differ significantly from prepared polyolefin compositions to prepared polyolefin compositions. However, all polyolefin compositions may comprise a majority of polyolefin. Preferably the polyolefin portion of the prepared polyolefin compositions is from 80 to 99.98 wt.%, more preferably from 95 to 99.95 wt.% and especially from 98 to 99,9 wt.%. The present disclosure not only refers to continuously preparing such polyolefin compositions comprising a virgin polyolefin fraction and a recycled polyolefin fraction but also to producing these compositions accurately with a very constant ratio of the components in an economical and reliable way.

The amount of polyolefin powder supplied to the extruder device, in particular the hopper of the extruder device is preferably regulated by a feeding device such as a rotary valve or a screwfeeder. By varying the speed of the feeding device, the amount of polyolefin powder supplied to the extruder device can be altered. The speed of the feeding device is preferably controlled by a controller in a way that the fed amount of polyolefin powder corresponds to a preselected set-point corresponding to the desired portion of the polyolefin in the polyolefin composition.

Applications

The article herein, comprising the compounded mixture of the recycled polymer and the chain extender or peroxide, can be used as a component to be blended with one or more virgin polymers to form one or more layers of container or article formed by blow molding. The article disclosed herein, comprising the compounded mixture of the recycled polymer and the chain extender or peroxide, has improved processability as compared to recycled polymer prior to addition of the chain extender or peroxide, believed to result from the reduced High Load Melt Index (HLMI) within the range of 10 to 45 g/10 min. In some embodiments, the article herein, is selected from the group comprising but not limited to cans, top drums, bags, food containers, beverage containers and jerry cans.

In some embodiments, the chain extenders or peroxides are additives used for adjusting the MFR of polymer compositions. They react with polymer chains, extends the polymer chain length and increases the molecular weight which leads to reduced MFR. This helps in utilising the same polymer matrix for different applications without drop in any mechanical properties including flexural notched charpy temperature (FNCT) and/or swell ratio.

The chain extenders or peroxide additives may be chosen based on its compatibility with the polymer matrix and requirements of end product. The chain extender is added to polymer matrix during the compounding stage of the recycling process to achieve required chain extension and the reduction in MFR.

In some embodiments, the mechanical properties of the recycled polymer composition including FNCT and/or swell ratio is maintained within a desired range suitable for small blow molding article production, espcially jerry can production.

Certain embodiments

A composition comprises a mixture of a recycled polymer and a chain extender. The recycled polymer comprises a polyolefin component present in an amount in the range from 50 wt% to 99wt%, preferably 75 wt% to 99 wt%, based on the total weight of the recycled polymer composition. The chain extenders are selected from acid anhydride, oxazolines, isocyanates, epoxides, lactams, hydroxyls, carboxylic acids and organic phosphites and phosphates or a mixture thereof. The chain extender is present in an amount in the range from 0.1 wt% to 3 wt%, based on the total weight of the recycled polymer composition. The mixture is subjected to melt-compounding conditions sufficient to form a polymer product.

In some embodiments, a composition comprises a mixture of a recycled polymer and a peroxide. The recycled polymer comprises a polyolefin component present in an amount in the range from 50 wt% to 99wt%, preferably 75 wt% to 99 wt%, based on the total weight of the recycled polymer composition. The peroxide are selected from didodecanoyl peroxide, Bis(4-tert-butylcyclohexyl) peroxydicarbonate, dicetyl dicarbonateperoxide, dibenzoyl peroxide, Dicumenyl peroxide, 2,5-Bis(tert-butylperoxy)-2,5-dimethylhexane, alpha-bis (tert-butyl peroxy) diisopropylbenzene, Di-tert-butyl peroxide, or a mixture thereof. The mixture is subjected to melt-compounding conditions sufficient to form a polymer product.

In some embodiments of the composition, in addition to one of more of the above limitations of the foregoing embodiments of the composition, the composition is further characterized by one of more of:

a) the mixture comprises from 50 wt% to 99wt%, preferably 75 wt% to 99 wt%, of the recycled polymer and from 0.1 wt% to 3 wt%, of the additive, based on the total weight of the recycled polymer composition

b) the recycled polymer is recycled polyolefins, preferably recycled polyethylene(PE), recycled polypropylene(PP), recycled polybutenes(PB), or a mixture thereof, wherein in further embodiments:

i) recycled polyethylene is selected from recycled high density polyethylene(HDPE), recycled low density polyethylene(LDPE), recycled linear low density polyethylene(LLDPE), recycled medium density polyethylene(MDPE), or a mixture thereof;

ii) recycled polypropylenes is selected from propylene homopolymer or a copolymer of units derived from propylene and units derived from one or more of ethylene and $C_4$-$C_{20}$ alpha-olefins or mixtures thereof;

c) the chain extender comprises units derived from the one or more comonomers in an amount in the range of from 0.1 wt% to 3 wt%, based on the weight of the composition;

d) the peroxide comprises units derived from the one or more comonomers in an amount in the range of from 0.1 wt% to 3 wt%, based on the weight of the composition;

In some embodiments, a method of producing the recycled polymer with reduced high load melt index value is disclosed, wherein the composition comprises a mixture of a recycled polymer and a peroxide. The recycled polymer comprises a polyolefin component present in an amount in the range from 50 wt% to 99wt%, preferably 75 wt% to 99 wt%, based on the total weight of the recycled polymer composition. The peroxide are selected from didodecanoyl peroxide, Bis(4-tert-butylcyclohexyl) peroxydicarbonate, dicetyl dicarbonateperoxide, dibenzoyl peroxide, Dicumenyl peroxide, 2,5-Bis(tert-butylperoxy)-2,5-dimethylhexane, alpha-bis (tert-butyl peroxy) diisopropylbenzene, Di-tert-butyl peroxide, or a mixture thereof. The mixture is subjected to melt-compounding conditions sufficient to form a polymer product.

In some embodiments, a method of reducing the high load melt index value of a recycled polymer is disclosed, the composition comprises a mixture of a recycled polymer and a peroxide. The recycled polymer comprises a polyolefin component present in an amount in the range from 50 wt% to 99wt%, preferably 75 wt% to 99 wt%, based on the total weight of the recycled polymer composition. The peroxide are selected from didodecanoyl peroxide, Bis(4-tert-butylcyclohexyl) peroxydicarbonate, dicetyl dicarbonateperoxide, dibenzoyl peroxide, Dicumenyl peroxide, 2,5-Bis(tert-butylperoxy)-2,5-dimethylhexane, alpha-bis (tert-butyl peroxy) diisopropylbenzene, Di-tert-butyl peroxide, or a mixture thereof. The mixture is subjected to melt-compounding conditions sufficient to form a polymer product.

Test Methods:

ASTM D 1238 is entitled "Test Method for Melt Flow Rates of Thermoplastics by Extrusion Plastometer." The term "ASTM D 1238" as used herein refers to a test method covering the determination of the rate of extrusion of molten thermoplastic resins using an extrusion plastometer. After a specified preheating time, resin is extruded through a die with a specified length and orifice diameter under prescribed conditions of temperature, load, and piston position in the barrel.

Throughout the present description and claims, the standard melt index values of polyethylenes are measured according to ASTM D 1238, using a piston load of 2.16 kg and at a temperature of 190 degrees Celsius. The High Load Melt Index (or HLMI) values are also measured according to ASTM D 1238, but using a piston load of 21.6 kg and at a temperature of 190 degrees Celsius.

Throughout the present description and claims, the standard melt flow rate values of polypropylenes are measured according to ASTM D 1238, using a piston load of 2.16 kg and at a temperature of 230 degrees Celsius. The High Load Melt Index (or HLMI) values are also measured according to ASTM D 1238, but using a piston load of 21.6 kg and at a temperature of 190 degrees Celsius.

Throughout the present description and claims, the standard melt flow rate values of polybutenes are measured according to ASTM D 1238, using a piston load of 2.16 kg and at a temperature of 230 degrees Celsius. The High Load Melt Index (or HLMI) values are also measured according to ASTM D 1238, but using a piston load of 21.6 kg and at a temperature of 190 degrees Celsius.

Throughout the present description and claims, the standard melt flow rate values of polyolefins are measured according to ASTM D 1238, using a piston load of 2.16 kg and at a temperature of 230 degrees Celsius. The High Load Melt Index (or HLMI) values are also measured according to ASTM D 1238, but using a piston load of 21.6 kg and at a temperature of 190 degrees Celsius.

Densities was determined in accordance with ASTM D-792 and ASTM D-1505/ISO-1183.

The environmental stress cracking resistance of polymer samples is determined in accordance to international standard ISO 16770:2004 (FNCT) in aqueous surfactant solution. From the polymer sample a compression moulded 10 mm thick sheet has been prepared. The bars with squared cross section ($10 \times 10 \times 100$ mm) are notched using a razor blade on four sides perpendicularly to the stress direction. A notching device described in M. Fleissner in Kunststoffe 77 (1987), pp.45 is used for the sharp notch with a depth of 1.6 mm.

The load applied is calculated from tensile force divided by the initial ligament area. Ligament area is the remaining area = total cross-section area of specimen minus the notch area. For FNCT specimen: $10 \times 10$ mm$^2$ - 4 times of trapezoid notch area = 46.24 mm$^2$ (the remaining cross-section for the failure process / crack propagation). The test specimen is loaded with standard condition suggested by the ISO 16770 with constant load of 4 MPa at 80°C or of 6 MPa at 50°C in a 2% (by weight) water solution of non-ionic surfactant ARKOPAL N100. Time until rupture of test specimen is detected.

The Swell-ratio of the studied polymers is measured utilizing a capillary rheometer, Göttfert Rheotester2000 and Rheograph25, at T = 190°C, equipped with a commercial 30/2/2/20 die (total length 30 mm, Active length=2 mm, diameter = 2 mm, L/D=2/2 and 20° entrance angle) and an optical device (laser-diod from Göttfert) for measuring the extruded strand thickness. Sample is molten in the capillary barrel at190°C for 6 min and extruded with a piston velocity corresponding to a resulting shear-rate at the die of 1440 s-1.

The extrudate is cut (by an automatic cutting device from Göttfert) at a distance of 150 mm from the die-exit, at the moment the piston reaches a position of 96 mm from the die-inlet. The extrudate diameter is measured with the laser-diod at a distance of 78 mm from the die-exit, as a function of time. The maximum value corresponds to the Dextrudate. The swell-ratio is determined from the calculation:

$$SR = (D_{extrudate} - D_{die}) 100\% / D_{die}$$

where $D_{die}$ is the corresponding diameter at the die exit, measured with the laser- diod.

For the sake of brevity, only certain ranges are explicitly disclosed herein. However, in addition to recited ranges, any lower limit may be combined with any upper limit to recite a range not explicitly recited, as well as, ranges from any lower limit may be combined with any other lower limit to recite a range not explicitly recited, in the same way, ranges from any upper limit may be combined with any other upper limit to recite a range not explicitly recited. Additionally, within a range includes every point or individual value between its end points even though not explicitly recited. Thus, every point or individual value may serve as its own lower or upper limit combined with any other point or individual value or any other lower or upper limit, to recite a range not explicitly recited.

All documents and references cited herein, including testing procedures, publications, patents, journal articles, etc., are herein fully incorporated by reference for all jurisdictions in which such incorporation is permitted and to the extent such disclosure is consistent with the description of the present invention.

Although the present invention and its advantages have been described in detail, it should be understood that various changes, substitutions and alterations can be made herein without departing from the invention as defined by the appended claims. Moreover, the scope of the present application is not intended to be limited to the particular embodiments of the processes, machines, means, methods, and/or steps described in the specification. As one of the ordinary skill in the art will readily appreciate from the disclosure of the present invention, processes, machines, means, methods, and/or steps, presently existing or later to be developed that perform substantially the same function or achieve substantially the same result as the corresponding embodiments described herein, may be utilized according to the present invention. Accordingly, the appended claims are intended to include within their scope such processes, machines, means, methods, and/or steps.

**Claims**

1. A recycled polymer composition comprising a mixture of:

   a) at least one recycled polymer;
   b) a reactive additive selected from chain extenders or peroxides,

   wherein the recycled polymer has a High Load Melt Index (HLMI) within the range of 18 to 45 g/10 min and wherein the addition of said additive to the recycled polymer results in a reduction of the High Load Melt Index (HLMI) to the range of 8 to 30 g/10 min.

2. The recycled polymer composition according to claim 1, wherein the recycled polymer is selected from the group consisting of recycled polyolefins, preferably recycled polyethylene(PE), recycled polypropylene(PP), recycled polybutenes(PB), or a mixture thereof.

3. The recycled polymer composition according to claim 1, wherein the recycled polymer is recycled polyethylene, preferably recycled high density polyethylene(HDPE), recycled low density polyethylene(LDPE), recycled linear low density polyethylene(LLDPE), recycled medium density polyethylene(MDPE), or a mixture thereof.

4. The recycled polymer composition according to claim 1, wherein the chain extenders are selected from acid anhydride, oxazolines, isocyanates, epoxides, lactams, hydroxyls, carboxylic acids and organic phosphites and phosphates or a mixture thereof.

5. The recycled polymer composition according to claim 1, wherein the peroxides are selected from didodecanoyl peroxide, Bis(4-tert-butylcyclohexyl) peroxydicarbonate, dicetyl dicarbonateperoxide, dibenzoyl peroxide, Dicumenyl peroxide, 2,5-Bis(tert-butylperoxy)-2,5-dimethylhexane, alpha-bis (tert-butyl peroxy) diisopropylbenzene, Di-tert-butyl peroxide, or a mixture thereof.

6. The recycled polymer composition according to claim 1, wherein the composition further comprises an additive package.

7. The recycled polymer composition according to claim 1, wherein the recycled polymer is present in the range of 50 wt% to 99wt%, preferably 75 wt% to 99 wt%, based on the total weight of the recycled polymer composition.

8. The recycled polymer composition according to claim 1, wherein the additives are present in the range of 0.1 wt% to 3 wt%, based on the total weight of the recycled polymer composition.

9. The recycled polymer composition according to claim 1, wherein the recycled polymer composition may optionally comprise virgin polymer, preferably polyolefins selected from polyethylenes, polypropylene, polybutenes, or a mixture thereof.

10. A process for producing a recycled polymer composition comprising the steps of:

    a) providing a recycled polymer feedstock;
    b) melt-compounding the recycled polymer and a reactive additive in an extruder;
    c) obtaining recycled polymer pellets,

wherein the addition of said reactive additive to the recycled polymer results in a reduction of the High Load Melt Index (HLMI) within the range of 8 to 30 g/10 min in comparison to the recycled polymer without the reactive additive.

11. The process for producing the recycled polymer composition according to claim 10, wherein the recycled polymer feedstock and the chain extender are melt compounded at a temperature in the range of 170 to 240°C

12. The process for producing the recycled polymer composition according to claim 10, wherein the reactive additive is added in an amount in the range of 0.1 wt% to 3 wt%, based on the total weight of the composition.

13. A process of producing a molded article comprising the steps of:

    a) providing a recycled polymer feedstock;
    b) extruding the recycled polymer feedstock at a temperature of 170 to 240°C;
    c) obtaining recycled polymer pellets;
    d) blow molding the recycled polymer pellets to form a recycled polymer product;
    e) adding a reactive additive,

wherein the addition of said additive to the recycled polymer results in a reduction of the High Load Melt Index (HLMI) to the range of 8 to 30 g/10 min.

14. The process of producing the molded article according to claim 19, wherein the blow molded article is selected from the group comprising but not limited to cans, top drums, bags, food containers, beverage containers and jerry cans.

15. The process of producing the molded article according to claim 19, wherein the blowmolded article has a High Load Melt Index in the range of 8 to 30 g/10min.

**EUROPEAN SEARCH REPORT**

Application Number

EP 23 19 8069

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 163 335 A1 (BOREALIS AG [AT]) 12 April 2023 (2023-04-12) * tables A,3,4 * * paragraph [0001] * | 1-15 | INV. C08K5/14 |
| A | US 2023/114045 A1 (LIU YI [AT] ET AL) 13 April 2023 (2023-04-13) * examples IE11,IE12,IE18,IE19; tables A,C,D * * paragraphs [0013], [0514] * | 1-15 | |
| A | EP 3 406 666 A1 (TOTAL RES & TECHNOLOGY FELUY [BE]) 28 November 2018 (2018-11-28) * tables 1b,2-8 * * paragraphs [0001], [0120] – [0122] * | 1-15 | |

TECHNICAL FIELDS
SEARCHED     (IPC)

C08K
C08L

The present search report has been drawn up for all claims

| Place of search | Date of completion of the search | Examiner |
|---|---|---|
| Munich | 4 February 2024 | van Bergen, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 19 8069

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2024

| Patent document cited in search report | | Publication date | Patent family member(s) | | Publication date |
|---|---|---|---|---|---|
| EP 4163335 | A1 | 12-04-2023 | EP | 4163335 A1 | 12-04-2023 |
| | | | WO | 2023057482 A1 | 13-04-2023 |
| US 2023114045 | A1 | 13-04-2023 | BR | 112022011747 A2 | 13-09-2022 |
| | | | CN | 114829481 A | 29-07-2022 |
| | | | EP | 4077531 A1 | 26-10-2022 |
| | | | KR | 20220117909 A | 24-08-2022 |
| | | | TW | 202126754 A | 16-07-2021 |
| | | | US | 2023114045 A1 | 13-04-2023 |
| | | | WO | 2021122299 A1 | 24-06-2021 |
| EP 3406666 | A1 | 28-11-2018 | EP | 3406666 A1 | 28-11-2018 |
| | | | ES | 2830427 T3 | 03-06-2021 |
| | | | LT | 3406666 T | 28-12-2020 |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3691145 A

- US 20100076160 A

**Non-patent literature cited in the description**

- **HANS ZWEIFEL**. Plastics Additives Handbook. 2001

- **M. FLEISSNER**. *Kunststoffe*, 1987, vol. 77, 45